Europäisches Patentamt

European Patent Office

Office européen des brevets

(19)

(11) Numéro de publication : **0 056 213**
**B1**

(12) # FASCICULE DE BREVET EUROPÉEN

(45) Date de publication du fascicule du brevet :
28.08.85

(51) Int. Cl.⁴ : **B 65 D 39/00**

(21) Numéro de dépôt : **81420148.9**

(22) Date de dépôt : **12.10.81**

(54) Bouchon en matière plastique expansée.

(30) Priorité : **23.12.80 FR 8027828**

(43) Date de publication de la demande :
**21.07.82 Bulletin 82/29**

(45) Mention de la délivrance du brevet :
**28.08.85 Bulletin 85/35**

(84) Etats contractants désignés :
**AT BE CH DE FR GB IT LI LU NL**

(56) Documents cités :
DE-A- 2 255 384
FR-A- 926 999
FR-A- 1 068 474
FR-A- 1 082 010
GB-A- 703 689
US-A- 2 313 476
US-A- 2 647 283
US-A- 2 774 104
US-A- 2 925 187
US-A- 3 430 532
US-A- 4 077 760
US-A- 4 188 457

(73) Titulaire : **SOCIETE NOUVELLE DE BOUCHONS PLASTIQUES S.N.B.P.**
**Route Nationale 6 B.P. 29 Les Chères**
**F-69480 Anse (FR)**

(72) Inventeur : **Babiol, Pierre**
**40, rue Dechavanne**
**F-69400 Villefranche sur Saône (FR)**

(74) Mandataire : **Karmin, Roger et al**
**Cabinet MONNIER 150, cours Lafayette**
**F-69003 Lyon (FR)**

Jouve, 18, rue St-Denis, 75001 Paris, France

## Description

La présente invention est relative à des bouchons en matière plastique expansée de forme substantiellement cylindrique.

On sait que le moulage d'objets en matière plastique expansée s'effectue en déposant dans un moule une quantité de matière contenant des agents moussants qui agissent une fois ladite quantité injectée dans le moule en vue de remplir complètement celui-ci. Bien entendu le volume de matière injectée dans la cavité du moule est largement inférieur au volume de celle-ci. On sait également que l'expansion de la matière plastique s'effectue sans développer des pressions importantes si bien que la fermeture de la cavité peut être effectuée par une force relativement faible appliquée à la partie ouvrante du moule par rapport à sa partie fixe.

On a décrit un tel moulage dans le document américain US.A. 4 188 457 qui se rapporte à la fabrication d'un bouchon cylindrique plein comportant deux surfaces d'extrémités et une surface latérale, sa section étant plus importante que celle du goulot destiné à le recevoir.

Lorsque le bouchon présente une arête périphérique vive entourant ses deux extrémités plates comme décrit dans le document US A 188 457 deux inconvénients apparaissent :

— pour sa mise en place le bouchon est d'abord comprimé radialement puis enfoncé dans le goulot de la bouteille de sorte que la pression d'air emprisonné dans celle-ci augmente. Cette augmentation est d'autant plus forte que l'arête vive de l'extrémité du bouchon qui s'enfonce dans la bouteille se retrousse pour former une lèvre circulaire d'étanchéité empêchant toute évacuation de l'air emprisonné. Dans certains cas cela provoque l'éclatement de la bouteille.

— la compression radiale résiduelle qui est exercée sur le bouchon en place provoque un gonflement de son extrémité correspondante ce qui nuit à l'esthétique. La forme des extrémités du bouchon établi conformément à l'invention permet de pallier ces deux inconvénients.

Lorsqu'un bouchon creux tel que celui décrit dans le document américain 2 925 187 est inséré dans le goulot d'une bouteille, de telle sorte que des efforts radiaux et axiaux s'exercent sur lui, son extrémité se rétracte en direction du haut, à l'intérieur du goulot, c'est exactement l'opposé de ce qui se passe au niveau de l'extrémité interne d'un bouchon plein, c'est-à-dire réalisé en une matière spongieuse. Lorsqu'un bouchon plein est compressé radialement, la matière plastique composant ce bouchon se déplace de telle sorte que ses extrémités se gonflent au-delà de leur position normale à l'état libre. Comme indiqué plus haut, ce bombement est inesthétique. De plus, les personnes non avisées pourraient croire qu'il s'agit d'une déformation due à la détérioration du contenu du récipient.

C'est pour remédier à cet inconvénient que la demanderesse a décidé de réaliser les extrémités de son bouchon concaves, de telle sorte que la matière déplacée par sa mise en place comble les parties concaves et permet que les extrémités dudit bouchon une fois engagé dans un goulot soient pratiquement planes et perpendiculaires à l'axe géométrique de ce dernier.

On observe que cette action est exactement opposée à celle qui se passe dans le cas d'un bouchon creux tel que celui du brevet américain 2 925 187. Dans ce dernier, la compression de la face latérale entraîne le bombement de la paroi extrême qui se déforme vers le haut de telle sorte que le dôme concave de son extrémité s'accentue. En outre, le fait de cette déformation vers le haut entraîne une augmentation du volume intérieur du récipient, ce qui tend à diminuer la pression interne quand le bouchon est mis en place.

On connaît aussi par le document français A 1 082 010 un bouchon creux dont l'extrémité intérieure est bombée au repos et se déforme pour devenir substantiellement plane lorsque ledit bouchon est enfoncé dans le récipient. Toutefois cette déformation ne peut pas permettre de remplir la fonction prévue suivant l'invention puisque selon cette dernière le bouchon est plein alors que celui de l'antériorité est creux.

Suivant l'invention, chacune des extrémités du bouchon plein en matière expansée inclut un congé périphérique reliant sa surface latérale à la surface d'extrémité correspondante afin de faciliter l'évacuation du surplus de gaz hors du récipient pendant l'enfoncement du bouchon, tandis que chacune de ses surfaces d'extrémités comporte une dépression centrale arrondie qui est comblée par le fluage de la matière provoqué par la compression centripète du bouchon.

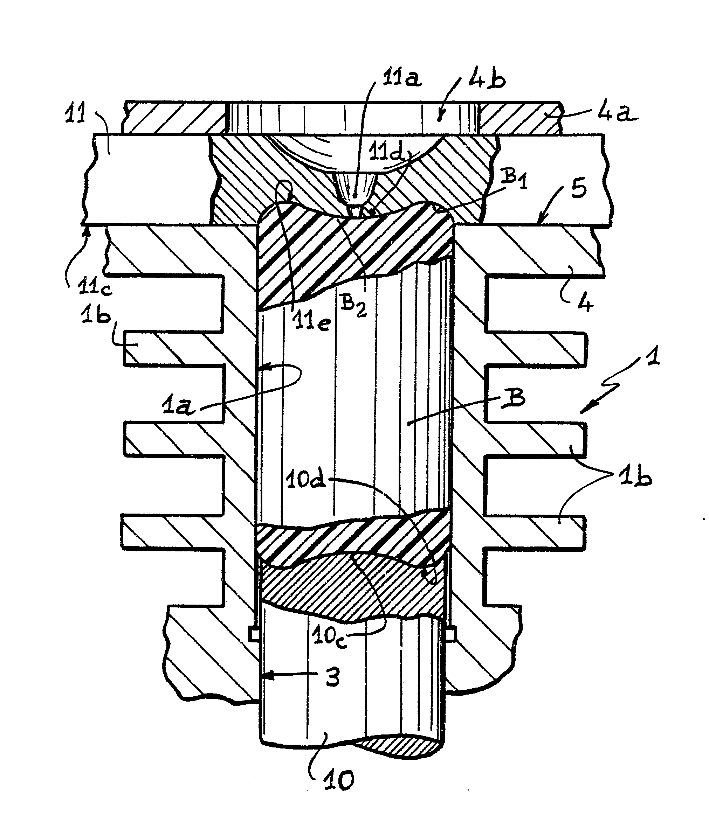

Le dessin annexé, donné à titre d'exemple, permettra de mieux comprendre l'invention, les caractéristiques qu'elle présente et les avantages qu'elle est susceptible de procurer :

La figure de ce dessin est une coupe longitudinale d'un moule destiné à l'injection d'une matière plastique expansée pour la réalisation d'un bouchon suivant l'invention.

Le moule 1 représenté comporte une cavité intérieure cylindrique, la destinée à la réalisation d'un bouchon cylindrique en matière plastique expansée (B). La périphérie du moule 1 est pourvue d'ailettes 1b assurant le refroidissement de la matière contenue dans le moule par un jet d'air envoyé sur celui-ci. La partie inférieure du moule 1 est pourvue d'une semelle comportant un alésage central 3. L'extrémité supérieure du moule 1 est pourvue d'un patin 4 comportant un couvercle 4a fixé sur le moule par deux vis, non représentées, noyées dans le patin. La cavité 1a est également ouverte au niveau du patin car elle débouche dans un passage longitudinal 5 pratiqué dans le couvercle 4a du patin 4. Au-dessus du passage 5 ce couvercle 4a comporte une ouverture centrale 4b prévue circulaire et présentant un diamètre largement supérieur à celui de la cavité 1a.

Le diamètre de l'alésage 3 est très légèrement inférieur de quelques dixièmes de millimètre à celui de la cavité 1a. Un plongeur 10 constituant éjecteur pénètre dans l'alésage 3 pour fermer son débouché dans la cavité 1a. Dans l'exemple représenté le plongeur 10 pénètre légèrement dans la cavité 1a de manière à déterminer la longueur du bouchon fini qui sera inférieure à celle de ladite cavité. Bien entendu cette disposition permet, en changeant la longueur du plongeur, d'obtenir un bouchon (B) de hauteur désirée.

Le passage ménagé dans le patin 4 est destiné à constituer glissière pour un tiroir 11, se présentant sous la forme d'une plaque allongée et qui est destinée à se déplacer dans ledit passage. Comme illustré, le tiroir 11 se trouve à la position de moulage, c'est-à-dire qu'il ferme complètement l'ouverture supérieure de la cavité 1a exception faite pour une perforation 11a constituant le trou de « carotte » pour l'introduction de la matière. Comme à l'accoutumée cette perforation comprend tout d'abord une partie sphérique destinée à l'appui de la buse d'une tête d'injection suivie d'un trou 11a conique en direction de l'extérieur pour le passage de la matière issue de ladite tête.

On observe que le plongeur 10 est venu se placer complètement à l'intérieur de la cavité 1a par suite de l'action d'un moyen quelconque, le déplacement considéré s'effectuant à l'encontre de la réaction d'un ressort de compression non représenté.

Suivant un mode de réalisation préféré de la disposition qui précède, l'extrémité supérieure du piston 10 comporte une partie centrale bombée 10c, convexe en direction de la cavité 1a et dont les bords sont raccordés à la périphérie dudit piston au moyen d'un congé annulaire 10d. De même le pourtour du débouché du trou 11a dans la face inférieure 11c du tiroir 11 comprend un relief composé d'une partie centrale bombée 11d convexe en direction de la cavité 1a et qui se prolonge par un congé annulaire 11e dont le diamètre de raccordement avec la face inférieure 11c du tiroir est égal à celui de ladite cavité.

Ainsi le bouchon B moulé dans la cavité 1a du moule 1 comporte-t-il à chacune de ses surfaces d'extrémités d'une part un rayon périphérique B₁ qui facilite l'évacuation du surplus d'air ou de liquide lors de son enfoncement dans le goulot de la bouteille, et d'autre part une dépression centrale B₂ arrondie qui évite un gonflement de l'extrémité extérieure du bouchon par compression centripète

## Revendication

Bouchon (B) réalisé en matière plastique expansée pour former un corps plein spongieux comportant une forme générale cylindrique dont la section est plus importante que celle du goulot d'un récipient dans lequel ledit bouchon doit être engagé à force, ce dernier comprenant une surface latérale et des surfaces d'extrémités, caractérisé en ce que chacune de ses extrémités inclut un congé périphérique (B₁) reliant sa surface latérale à la surface d'extrémité correspondante afin de faciliter l'évacuation du surplus de gaz hors du récipient pendant l'enfoncement du bouchon, et en ce que chacune de ses surfaces d'extrémités comporte une dépression centrale (B₂) arrondie qui est comblée par le fluage de la matière provoqué par la compression centripète du bouchon.

## Claim

A plug (B) made of plastics material expanded to form a spongy solid body having a cylindrical general shape the section of which is larger than that of the neck of a receptacle into which the said plus has to be engaged by force, the latter comprising a lateral surface and end surfaces, characterised in that each of its ends includes a peripheral bulge (B₁) connecting its lateral surface to the corresponding end surface in order to facilitate the evacuation of the surplus of gas from the receptacle during the driving-in of the plug, and in that each of its end surfaces comprises a rounded central (B₂) depression which is filled by the flow of the material caused by the centripetal compression of the plug.

## Patentanspruch

Stopfen (B) aus Schaumkunststoff, bestehend aus einem vollen schwammartigen, im allgemeinen zylindrischen Körper, dessen Querschnitt großer ist als derjenige des Behälter halses, in den der Stopfen eingepreßt werden soll, wobei letzterer eine Mantelfläche sowie Endflächen aufweist, dadurch gekkenzeichnet, daß jede Endfläche einen Umfangsbereich (B₁) besitzt, der die Mantelfläche des Stopfens mit der entsprechenden Endfläche verbindet und so das Entweichen von überschüssigem Gas aus dem Behälter während des Einsetzens des Stopfens erleichtert, und daß letzterer an jeder Endfläche eine abgerundete mittige Vertiefung (B₂) aufweist, die durch das vom zentripetalen Zusammendrücken des Stopfens herrührende Fließen des Materials ausgefüllt wird.